# EUROPEAN PATENT SPECIFICATION

(11) **EP 2 433 850 B1**
(45) Date of publication and mention of the grant of the patent: **16.01.2013**
(21) Application number: 11183122.8
(22) Date of filing: 28.09.2011
(51) Int. Cl.: B62D 25/08

(54) **Torque rod mounting structure for motor vehicle**
Strebeanordnung für Kraftfahrzeugen
Structure de montage d'une jambe de force pour véhicule automobile

(30) Priority: 28.09.2010 JP 2010216897
(43) Date of publication of application: 28.03.2012
(73) Proprietor: Honda Motor Co., Ltd., Tokyo 107-8556 (JP)
(72) Inventor: Takeda, Tomoya, Saitama, 351-0193 (JP); Takata, Masaru, Saitama, 351-0193 (JP)
(74) Representative: Feller, Frank

(56) References cited:
- EP-A1- 1 834 862
- JP-U- 63 096 978
- US-A- 5 244 248
- US-A- 5 267 630

## Description

The present invention relates to a torque rod mounting structure for mounting one end of a torque rod to a vehicle body with an opposite end of the torque rod being connected to an engine.

Torque rod mounting structures of the type concerned are known as disclosed in, for example, Japanese Patent Application Laid-open Publication (JP-A) No. 2009-248616. The disclosed torque rod mounting structure includes a mounting bracket attached to and projecting from the engine, a first vibration isolating bush press-fitted in a hole of a bush retaining portion of the bracket and connected to one end of a torque rod, and a second vibration isolating bush provided on an opposite end of the torque rod and attached to a vehicle body. With the torque rod mounting structure thus arranged, the torque rod is able to support the engine and also to suppress loads or vibrations transmitted from the engine.

The foregoing torque rod mounting structure is, however, not fully satisfactory in that in order to deal with a large engine torque with increased vibration suppressing efficiency, the mounting bracket needs to be thickened, and the thickened mounting bracket is heavy itself and increases the size and weight of the entire torque rod mounting structure.

Another example of the prior art is shown in US 5 244 248.

It is therefore an object of the present invention to provide a torque rod mounting structure which is capable of suppressing vibration of an engine with increased efficiency, can lower the weight of a mounting bracket while keeping a desired level of strength of the bracket, and is able to prevent generation of unpleasant vibration noise.

According to the present invention, there is provided a torque rod mounting structure for mounting one end of a torque rod to a vehicle body with an opposite end of the torque rod being connected to an engine installed in an engine room of the vehicle body, the torque rod mounting structure comprising: a damper housing forming a part of the vehicle body and facing the engine room; and a bracket assembly including: an upper bracket attached to the damper housing and projecting from the damper housing into the engine room, the upper bracket having a front end portion disposed above and connected to the one end of the torque rod; a lower bracket attached to the damper housing and projecting from the damper housing into the engine room, the lower bracket having a front end portion disposed beneath and connected to the one end of the torque rod; and a stay bracket having a first end attached to the damper housing below the lower bracket and a second end opposite to the first end and connected to the front end portion of the lower bracket, wherein the stay bracket is configured to form, together with the damper housing, a hollow portion having a closed cross section.

With this arrangement, by virtue of the stay bracket so configured as to form together with the damper housing a hollow portion having a closed cross section, a load applied from the torque rod to the bracket assembly is distributed in a branched fashion to the damper housing. By thus distributing the applied load, it is possible to increase the load-bearing strength of the bracket assembly and also to suppress vibration of the engine with increased efficiency while allowing use of a relatively thin sheet metal for the bracket assembly, which will achieve a certain weight reduction of the bracket assembly.

Preferably, the damper housing has a vertical bead of convex cross section projecting in a width direction of the vehicle body into the engine room and extending in a vertical direction of the vehicle body, the upper bracket has a rear end connected to the vertical bead, and the lower bracket has a rear end connected to the vertical bead. The load applied from the torque rod to the bracket assembly is distributed in a branched fashion to the damper assembly as it is transmitted from the rear ends of the upper and lower brackets to the vertical bead of the damper bracket. By thus distributing the applied load, it is possible to increase the load-bearing capacity of the torque rod mounting structure.

Preferably, the upper bracket has a side flange facing toward a lateral inward direction of the vehicle body and forming a part of the rear end of the upper bracket, the lower bracket has a side flange facing toward the lateral inward direction of the vehicle body and forming a part of the rear end of the lower bracket, and the side flange of the upper bracket has a stepped lower end portion rising toward the lateral inward direction of the vehicle body at a height greater than a thickness of the side flange of the lower bracket, the stepped lower end portion being joined with the side flange of the lower bracket. By thus providing the stepped lower end portion, the side flange of the upper bracket can be placed on the side flange of the lower bracket from the engine room side in such a manner that respective surfaces of the side flanges which face the damper housing lie substantially flush with each other. This arrangement can eliminate the need for a recessed portion formed in the vertical bead for accommodating the thickness of the side flange of the lower bracket, which may lead to reduction of the load-bearing capacity of the torque rod mounting structure.

Preferably, the vertical bead of the damper housing has a protrusion disposed in a longitudinal intermediate portion of the vertical bead, the side flange of the lower bracket has a stepped lower end portion rising toward the lateral inward direction of the vehicle body at a height smaller than a height of the protrusion and joined with the protrusion of the vertical bead. With this arrangement, a joint portion between the upper bracket and the lower bracket forms a non-contact portion relative to the damper housing. In order to prevent generation of unpleasant vibration noise, it is desired that a space be provided between the joint portion and the damper housing. In this instance, if the space is excessively small, it will lead to generation of unpleasant vibration noise. Alternatively, if the space is excessively large, it will lead to reduction in bonding strength of the joint portion. However, according to the present invention, the stepped lower end portion of the side flange of the lower bracket serves to effectively block or prevent vibration from transmitting from a joint portion between the lower bracket and the damper housing to the joint portion between the side flanges of the upper and lower brackets, and also to keep the space between the joint portion between the upper and lower bracket and the damper housing within a desired range, thereby securing a desired bonding strength of the joint portion.

Preferably, the stepped lower end portion of the side flange of the upper bracket and the stepped lower end portion of the side flange of the lower bracket extend in a front-rear direction of the vehicle body. The thus arranged stepped lower end portions of the upper and lower brackets increase the strength of the upper and lower brackets, which will lead to an increase in the load-bearing strength of the bracket assembly.

Preferably, the side flange of the lower bracket has a varying height increasing gradually in a direction from a front end toward a rear end of the side flange. With this arrangement, a component of the applied load acting in the front-rear direction of the vehicle body is distributed through the side flange of the lower bracket to a wider area of the damper housing.
Fig. 1 is a perspective view of a vehicle front body in which a torque rod mounting structure according to an embodiment of the present invention is incorporated;
Fig. 2 is a perspective view of the torque rod mounting structure shown with a torque rod removed for clarity;
Fig. 3 is a view similar to Fig. 2, but showing the torque rod mounting structure with a torque rod being about to be mounted to the vehicle front body via a bracket assembly;
Fig. 4 is a perspective view as seen from the direction of arrow 4 shown in Fig. 3;
Fig. 5 is a cross-sectional view taken along line 5-5 of Fig. 1;
Fig. 6 is an enlarged view of a part indicated by a circle 6 shown in Fig. 5;
Fig. 7 is a cross-sectional view taken along line 7-7 of Fig. 2;
Fig. 8 is a cross-sectional view taken along line 8-8 of Fig. 2;
Fig. 9 is a cross-sectional view taken along line 9-9 of Fig. 2;
Fig. 10 is a side view showing a stay bracket of the torque rod mounting structure as it is attached to a damper housing of the vehicle front body;
Fig. 11 is a cross-sectional view taken along line 11-11 of Fig. 10;
Fig. 12 is a perspective view of the stay bracket and a stiffener as seen from below; and
Fig. 13 is a cross-sectional view taken along line 13-13 of Fig. 12.

A preferred structural embodiment of the present invention will be described below in detail with reference to the accompanying sheets of drawings.

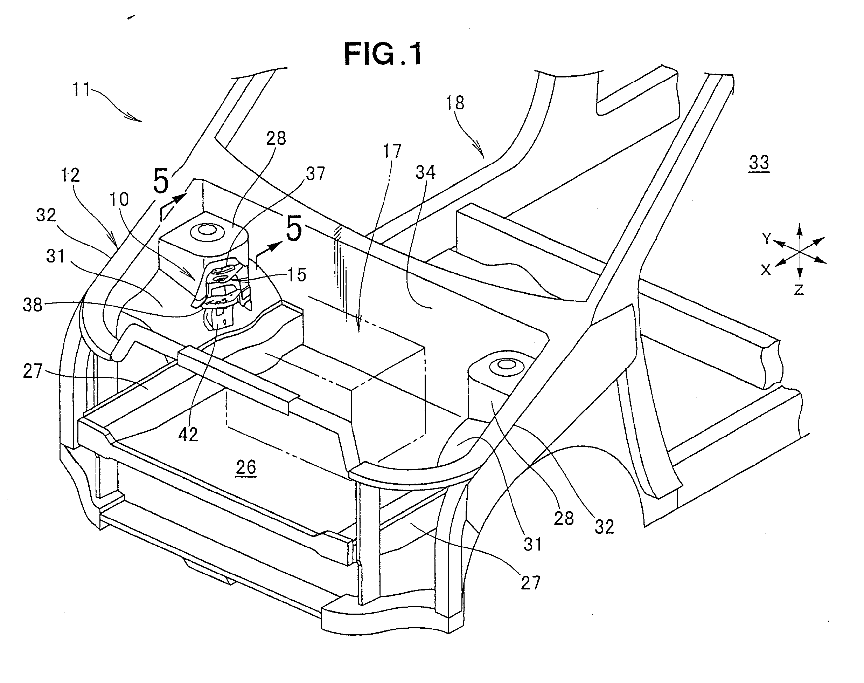

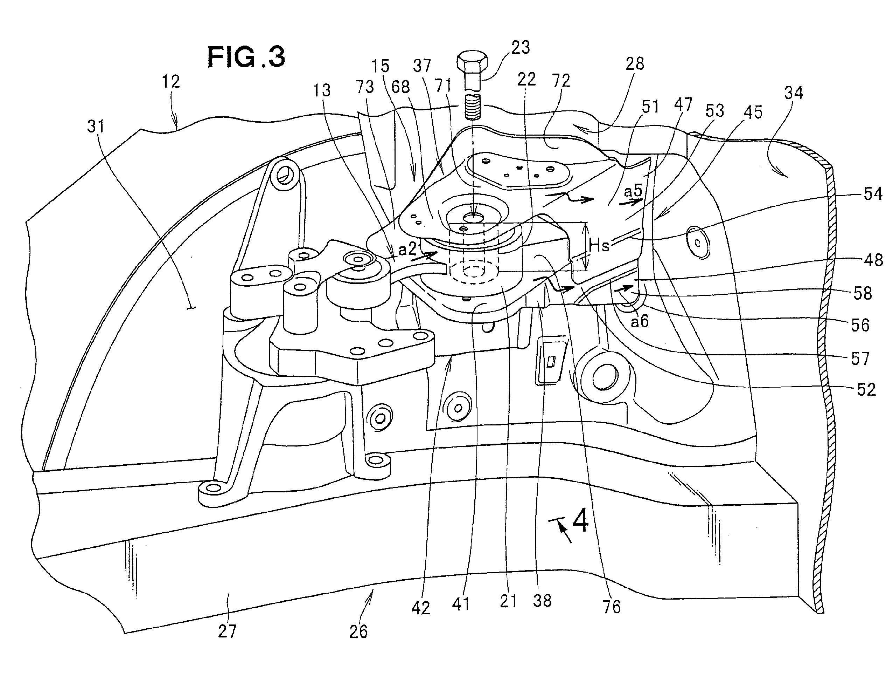

Referring now to Fig. 1, there is shown a torque rod mounting structure 10 incorporated in a front body 12 of a vehicle 11 for mounting one end of a torque rod 13 (Fig. 3) to the vehicle front body 11 via a bracket assembly 15. The front body 12 has an engine room 26 in which an engine 17 is installed in such a manner that the engine 17 is supported by the torque rod 13 (Fig. 3) and other mounting devices. The engine 17 has cylinders disposed on a right side thereof and a transmission on a left side thereof that are as viewed from a forward travel direction of the vehicle. The torque rod 13 (Fig. 3) is connected to the right side of the engine 17.

The front body 12 includes left and right front side frames 27, 27, left and right damper housings 28, 28, left and right wheelhouse inner members 31, 31, left and right front upper members 32, 32, and a dashboard 34 isolating a passenger compartment 33 from the engine room 26.

The torque rod 13 (Fig. 3) is used to support the engine 17 onto a vehicle body 18 including the front body 12. The torque rod 13 has an end 21 connected via the bracket assembly 15 to the front body 12. The end 21 of the torque rod 13 has a tubular shape and is provided with a vibration isolating member (made of rubber, for example) having a steel bush 22 embedded therein in concentric relation with the tubular end 21. The steel bush 22 has a length Hs (Fig. 3) and is connected to the bracket assembly 15 by means of a bolt 23. The torque rod 13 is thus mounted to the front body 12.

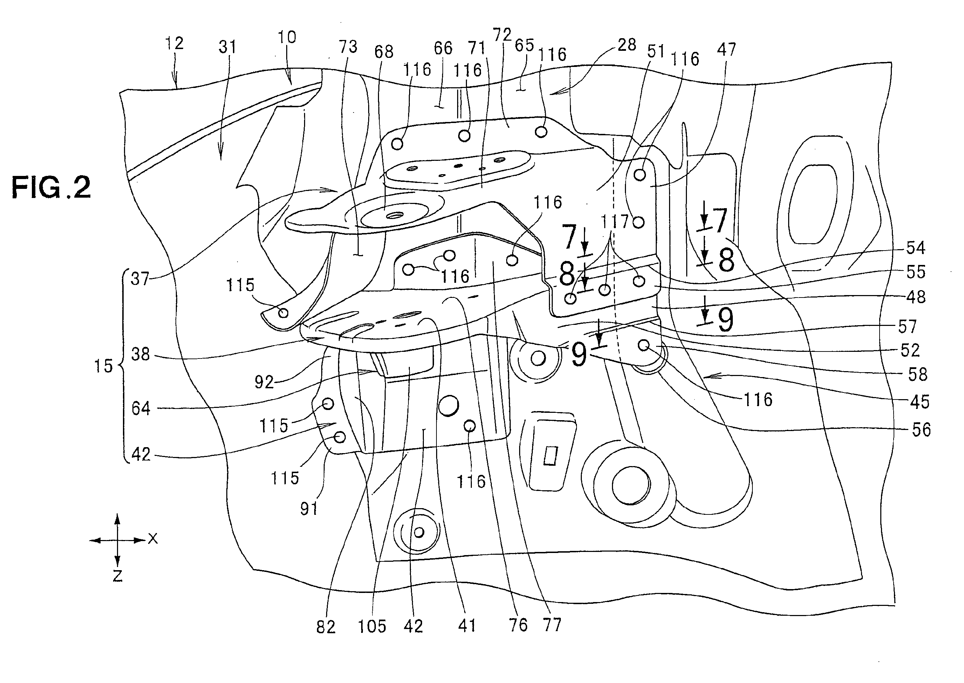

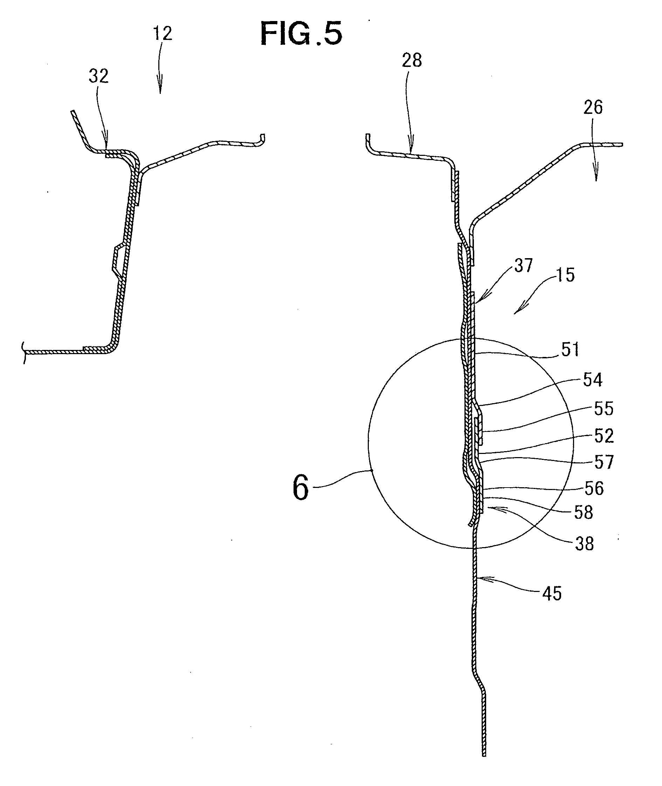

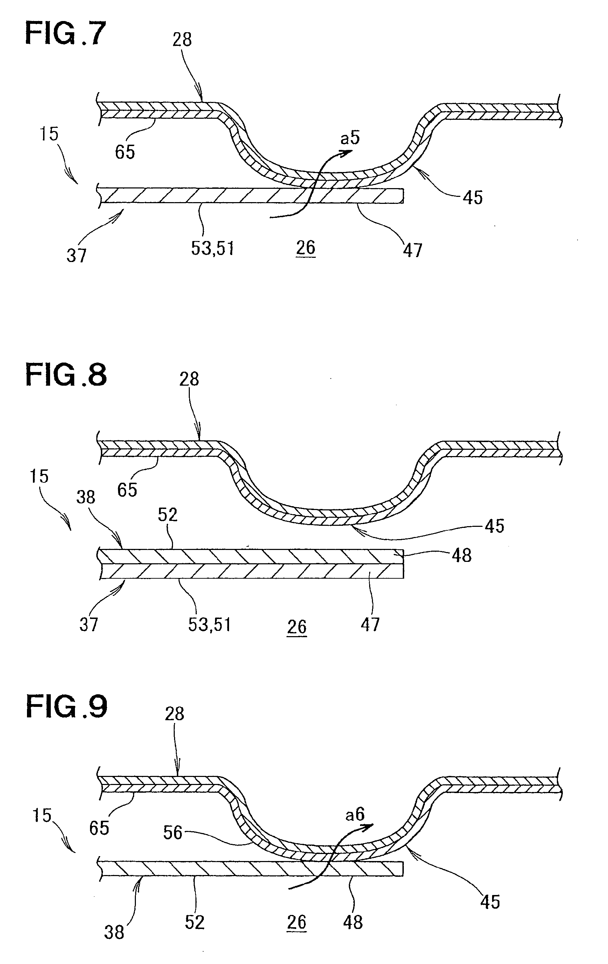

The torque rod mounting structure 10 of the present invention will be described in greater detail with reference to Figs. 2 to 13, wherein in several views, a double-headed arrow X denotes a longitudinal or front-rear direction of the vehicle 11, a double-headed arrow Y denotes a transverse or width direction of the vehicle 11, and a double-headed arrow Z denotes a vertical or height direction of the vehicle 11.

The torque rod mounting structure 10 is generally comprised of the damper housing 28 and the bracket assembly 15. The damper housing 28 forms a part of a wall defining the engine room 26 and, hence, it is disposed to face the engine room 26. The bracket assembly 15 is attached to and projects from the damper housing 28 in a cantilevered fashion, so as to support the end 21 of the torque rod 13 on a front end portion thereof.

More specifically, as shown in Figs. 2 to 4, the bracket assembly 15 includes a pair of vertically spaced upper and lower brackets 37 and 38 attached at one end (rear end) to the damper housing 28 and projecting from the damper housing 28 into the engine room 26, and a stay bracket 42 having one end (rear end) attached to the damper housing 28 below the lower bracket 38 and an opposite end (front end) attached to a front end portion 41 of the lower bracket 38. Each of the upper bracket 37, lower bracket 38 and stay bracket 42 is formed by press-forming from a sheet metal into a desired shape and configuration.

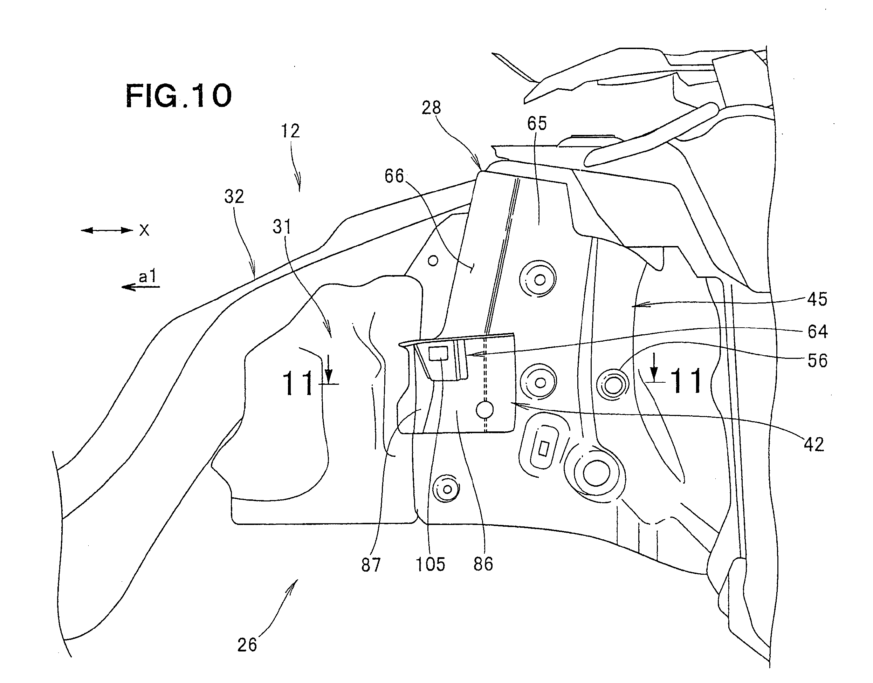

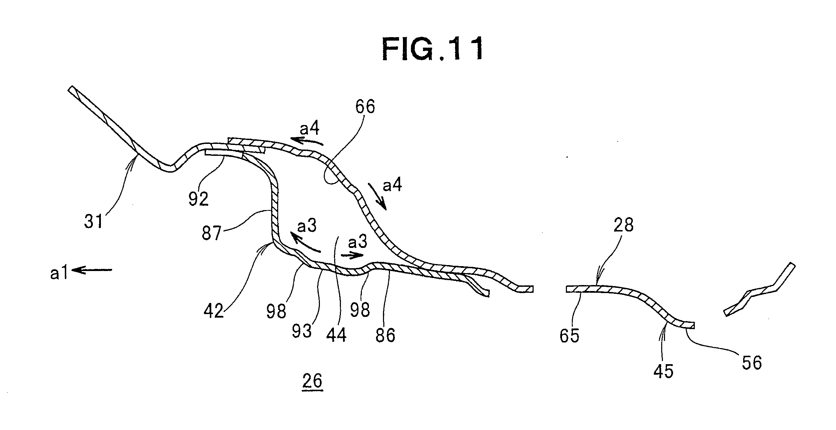

The upper bracket 37 has a front end portion 68 disposed above the tubular end 21 of the torque rod 13 and connected to the tubular end 21. The front end portion 41 of the lower bracket 38 is disposed beneath the tubular end 21 of the torque rod 13 and connected to the tubular end 21. As shown in Figs. 10 and 11, the stay bracket 42 is configured to form, together with the damper housing 28, a hollow portion 44 having a closed cross section (Fig. 11).

The damper housing 28 has a vertical bead 45 protruding convexly into the engine room 26 (in a lateral inward direction of the vehicle body 18) and extending in a vertical direction of the vehicle body 18. The rear end 47 of the upper bracket 37 is connected by spot-welding to the vertical bead 45 of the damper housing 28. Similarly, the rear end 48 of the lower bracket 38 is connected by spot-welding to the vertical bead 45 of the damper housing 28.

The upper bracket 37 has a lateral side flange 51 extending downwardly from one side edge thereof and facing toward a lateral inward direction of the front body 12. The side flange 51 has a rear end portion forming a part of the rear end 47 of the upper bracket 37 at which the upper bracket 37 is connected to the vertical bead 45. Similarly, the lower bracket 38 has a lateral side flange 52 extending downwardly from one side edge thereof and facing toward a lateral inward direction of the front body 12. The side flange 52 has a rear end portion forming a part of the rear end 48 of the lower bracket 38.

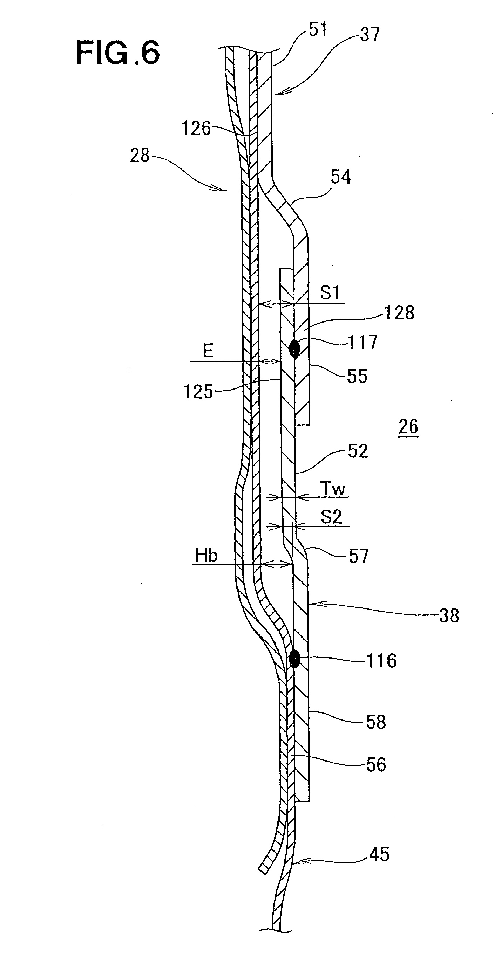

As shown in Figs. 2 and 6, the side flange 51 of the upper bracket 37 is stepped as at 54 so as to form a stepped lower end portion 55 of the side flange 51. The step 54 has a height S1 (Fig. 6) greater than a thickness Tw (Fig. 6) of the side flange 52 of the lower bracket 38, and the stepped lower end portion 55 is connected by spot-welding to the side flange 52 of the lower bracket 38. It will be appreciated that the stepped lower end portion 55 of the side flange 51 rises toward a lateral inward direction of the vehicle body 18 at the height S1 of the step 54.

As shown in Figs. 2, 5, 6 and 10, the vertical bead 45 has a circular protrusion 56 disposed in a longitudinally intermediate potion thereof and projecting into the engine room 26. The protrusion 56 has a height Hb (Fig. 6). The side flange 52 of the lower bracket 38 is stepped as at 57 so as to form a stepped lower end portion 58 of the slide flange 52. The step 57 has a height S2 (Fig. 6) smaller than the height Hb of the protrusion 56, and the stepped lower end portion 58 is connected by spot-welding to the protrusion 56. It will be appreciated that the stepped lower end portion 58 of the side flange 52 rises toward the lateral inward direction of the vehicle body 18 at the height S2 of the step 57.

The stepped lower end portion 55 of the side flange 51 and the stepped lower end portion 58 of the side flange 52 are parallel to each other and extend in a longitudinal or front-rear direction of the vehicle 11. The side flange 52 of the lower bracket 38 has a varying height, which increases gradually in a direction from a front end toward a rear end of the side flange 52.

As discussed above, the damper assembly 15 is composed of the upper bracket 37, the lower bracket 38 and the stay bracket 42 and projects from the damper housing 28 of the vehicle body 18 into the engine room 26. The bracket assembly 15 further includes a stiffener 64 and is reinforced by the stiffener 64.

As shown in Figs. 2, 10 and 11, the damper housing 28 has a side wall 65 facing toward a lateral inward direction of the vehicle body 18, and a front wall 66 contiguous with the side wall 65 and facing toward a forward direction of the vehicle body 18 as indicated by arrow a1 (Figs. 10 and 11). The upper bracket 37 projects from respective upper portions of the side and front walls 65, 66 of the damper housing 28.

As shown in Figs. 2 and 3, the upper bracket 37 has a bracket body 71 formed to lie in a substantially horizontal plane and including the front end portion 81 to which the tubular end 21 of the torque rod 13 is to be connected. The bracket body 71 has one side edge from which the side flange 51 extends downwards. The upper bracket 37 also includes a rear end flange 72 extending upwardly from a rear end edge of the bracket body 71 and connected by spot-welding to the damper housing 28, and another side flange 73 extending downwardly from an opposite side edge of the bracket body 71 and connected by spot-welding to the wheelhouse inner member 31.

As discussed above, the rear end portion of the side flange 51 forms a part of the rear end 47 of the upper bracket 37 at which the upper bracket 37 is connected to the vertical bead 45 of the damper housing 28. By virtue of the step 54 formed on the side flange 51 of the upper bracket 37, a joint portion 128 (Fig. 6) between the stepped lower end portion 55 of the side flange 51 of the upper bracket 37 and the side flange 52 of the lower bracket 38 is not connected to the damper housing 28 but separated from the damper housing 28 by at least a distance E (Fig. 6). More specifically, that part of the rear end portion of the side flange 51, which excludes the stepped lower end portion 55, is directly connected to the damper housing 28. The stepped lower end portion 55 of the side flange 51 is connected to the side flange 52 of the lower bracket 38.

As shown in Figs. 2 to 4, the lower bracket 38 has a bracket body 76 formed to lie in a substantially horizontal plane and including the front end portion 41 to which the tubular end 21 of the torque rod 13 is to be connected. The front end portion 41 of the lower bracket 38 is in contact with a lower end face of the steel bush 22 provided at the end 21 of the of the torque rod 13. The bracket body 76 has one side edge from which the side flange 52 extends downwards. The side flange 52 has a substantially triangular shape as viewed from a lateral side of the vehicle 11. The lower bracket 38 also includes a rear end flange 77 (Fig. 2) extending upwardly from a rear end edge of the bracket body 76 and connected by spot-welding to the damper housing 28, and another side flange 38a extending downwardly from an opposite side edge of the bracket body 76.

As discussed above, the stepped lower end portion 58 of the side flange 52 is connected to the protrusion 56 (Fig. 6) of the vertical bead 45 of the damper housing 28. That part of the side flange 52, which excludes the stepped lower end portion 58, and which includes the joint portion 128 (Fig. 6) between the side flange 52 of the lower bracket 38 and the side flange 51 of the upper bracket 37, is separated from the damper housing 28. The stay bracket 42 is joined to the underside of the lower bracket 38.

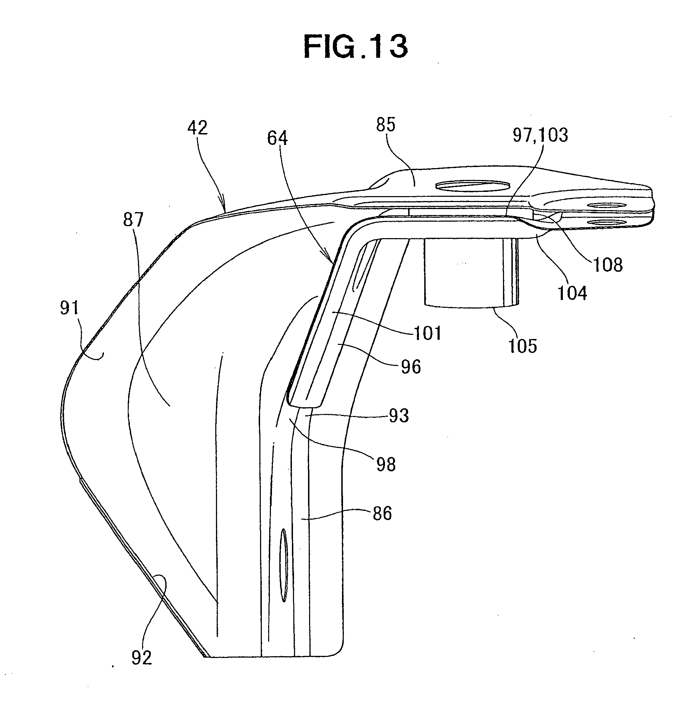

As shown in Figs. 1 and 10 to 13, the stay bracket 42 has a generally inverted L-shaped configuration as viewed from a front side of the vehicle 11 (see Fig. 13). The stay bracket 42 includes a substantially horizontal head portion forming a bracket-attachment portion 85, and a substantially vertical portion formed jointly by a side wall portion 86 and a front wall portion 87 that extend downwardly from an end of the bracket-attachment portion 85. As shown in Fig. 11, the side wall portion 86 and the front wall portion 87 of the stay bracket 42 and the front wall 66 of the damper housing 28 together form the hollow portion 44 having a closed cross section.

The bracket-attachment portion 85 of the stay bracket 42 is disposed beneath and connected to the front end portion 41 of the lower bracket 38. The front wall portion 87 of the stay bracket 42 includes a body of generally triangular shape and has first and second connecting flanges 91 and 92 extending along a side edge of the triangular body and connected by spot-welding to the damper housing 28. The side wall portion 86 of the stay bracket 42 has a vertical rib 93 of U-shaped cross section projecting in a lateral inward direction of the vehicle body 18 and extending vertically along a front side edge of the side wall portion 86, which is adjacent to the front wall portion 87. The stiffener 64 has a portion overlapping the vertical rib 93.

The side wall portion 86 and the front wall portion 87 of the stay bracket 42 form a first end of the stay bracket 42 which is attached to the damper housing 28 below the lower bracket 38, and the bracket-attachment portion 85 of the stay bracket 42 forms a second end of the stay bracket 42 which is connected to the front end 41 of the lower bracket 38.

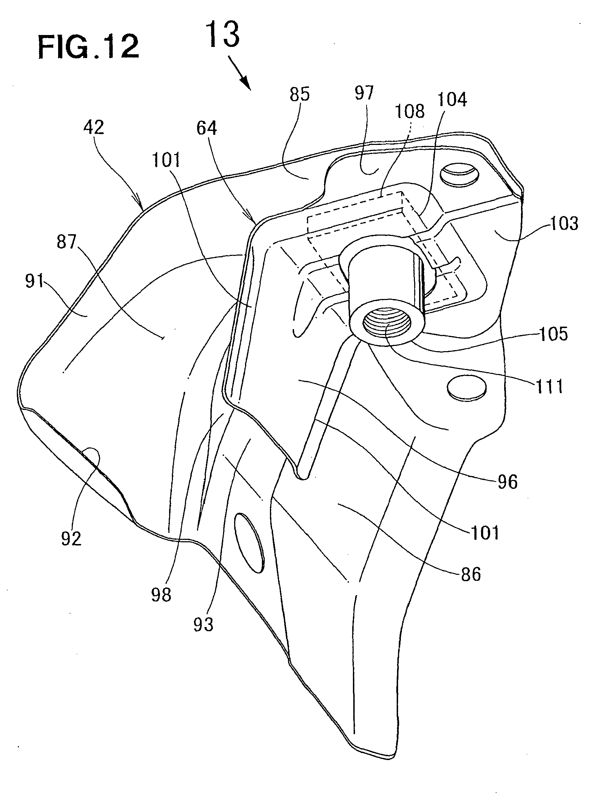

As shown in Figs. 12 and 13, the stiffener 64 has a generally inverted L-shaped configuration and includes a substantially vertical first attachment portion 96 and a substantially horizontal second attachment portion 97. The first and second attachment portions 96, 97 of the stiffener 64 are connected to the stay bracket 42. The first attachment portion 96 is complementary in contour with the shape of the vertical rib 93 of the stay bracket 42 so that the first attachment portion 96 and the vertical rib 93 can fit with each other. The first attachment portion 96 has a pair of opposite sidewalls 101, 101 fitted over a pair of opposite sloped side walls 98, 98 (Fig. 11) of the vertical rib 93. By thus providing the sidewalls 101, the strength of the first attachment portion 96 is increased, which will eventually increase the strength of the lower bracket 38 to the extent that the torque rod 13 can be stably supported by the bracket assembly 15.

The second attachment portion 97 of the stiffener 64 has a flat body 103 disposed beneath and connected to the bracket-attachment portion 85 of the stay bracket 42, and a recessed portion 104 formed in the flat body 103 for receiving therein an axial force retaining member 105. The axial force retaining member 105 is fittingly received in the recessed portion 104 of the second attachment portion 97. The flat body 103 of the second attachment portion 97 shown in Fig. 13 is downwardly spaced a distance from the bracket-attachment portion 85 of the stay bracket 42 so as to allow a human operator to visually observe a part or object existing between the flat body 103 an the bracket-attachment portion 85.

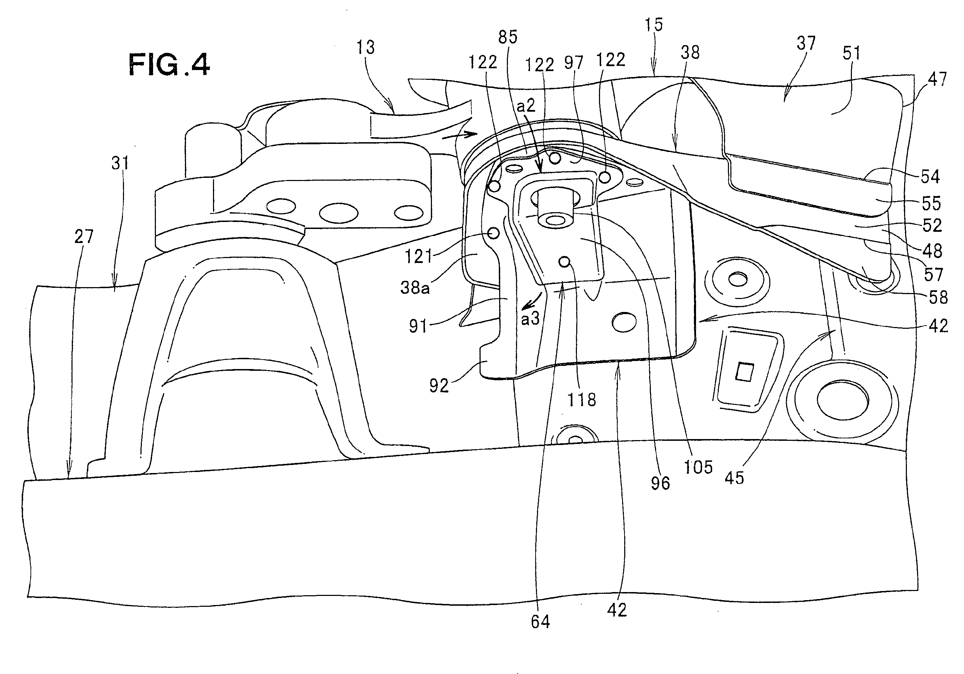

The axial force retaining member 105 has a substantially rectangular load-bearing portion 108 received in the recessed portion 104 of the stiffener 64 for receiving or bearing a load applied from the steel bush 22 of the torque rod 13 (Figs. 3 and 4), and an internally threaded hollow cylindrical portion 111 (Fig. 12) formed integrally with the load-bearing portion 108 for threaded engagement with an externally threaded shank of the bolt 23 (Fig. 3) which is used to join the steel bush 22 of the torque rod 13 and the bracket assembly 15.

The load-bearing portion 108 of the axial force retaining member 105 is disposed between the flat body 103 of the stiffener 64 and the bracket-attachment portion 85 of the stay bracket 42 while it is fittingly received in the recessed portion 104 of the stiffener 64. With this arrangement, the load-bearing portion 108 is able to receive or retain an axial force (tightening force) applied via the bracket-attachment portion 85 of the stay bracket 42 and the front end portion 41 of the lower bracket 38 when the bolt 23 (Fig. 3) is threaded by a desired tightening force into the internally threaded hollow cylindrical portion 111 of the axial force retaining member 105. In this instance, the bolt 23, as it is threaded into the internally threaded hollow cylindrical portion 111 by the desired tightening force, produces an axial force tending to force the steel bush 22 against the load-bearing portion 108 of the axial force retaining member 105 with a desired surface pressure, so that the steel bush 22 provided at the end 21 of the torque rod 13 can be connected to the bracket 15 with increased reliability.

Referring next to Figs. 2, 4 and 6, a description will be made about welding parts or spots at which the bracket assembly 15 is subject to a spot-welding process. In Figs. 2 and 3, the welding spots are indicated by open circles. The bracket assembly 15 is spot-welded at welding spots 115 to the wheelhouse inner member 31. The bracket assembly 15 is also spot-welded at welding spots 116 to the damper housing 28. The upper bracket 37 is spot-welded at welding spots 117 to the lower bracket 38. The stiffener 64 is spot-welded at a welding spot 118 (Fig. 4) to the stay bracket 42. The stay bracket 42 is spot-welded at a welding spot 121 (Fig. 4) to the side flange 38a of the lower bracket 38. The front end portion 41 of the lower bracket 38, the bracket-attachment portion 85 of the stay bracket 42, and the second attachment portion 97 of the stiffener 64 are spot-welded together at welding spots 122 (Fig. 4). The welding spots 115-118 and 121-122 each constitute a welded heat-affected zone of a base material (steel sheet) including a nugget formed by spot-welding.

The torque rod mounting structure 10 of the foregoing construction will operates as follows. When a load from the torque rod 13 is applied to the bracket assembly 15 as indicated by arrow a2 shown in Figs. 3 and 4, the applied load is transmitted to the lower bracket 38 and the damper housing 28. In this instance, by virtue of the hollow portion 44 of closed cross section (Fig. 11) formed by and between the stay bracket 42 and the damper housing 28, the applied load is distributed in a branched fashion to the stay bracket 42 and the damper housing 28 as indicated by arrows a3 and a4 shown in Fig. 11. By thus distributing the applied load, it is possible to suppress vibration of the engine 17 with increased efficiency while allowing use of a relatively thin sheet metal for forming the bracket assembly 15. This will achieve a certain weight reduction of the bracket assembly 15.

Furthermore, as shown in Figs. 3 and 7 to 9, the load applied from the torque rod 13 to the bracket assembly 15 is also distributed in a branched fashion to the damper housing 28 as it is transmitted from the rear ends 47, 48 of the upper and lower brackets 37, 38 to the vertical bead 45 of the damper housing 28, as indicated by arrows a5 and a6. By thus distributing the load, it is possible to increase the yielding strength of the damper housing 28 and the bracket assembly 15 against the load from the torque rod 13.

Additionally, by virtue of the step 54 formed on the side flange 51 of the upper bracket 37 as shown in Fig. 6, when the stepped lower end portion 55 of the side flange 51 is overlapped with the side flange 52 of the lower bracket 38, an outer surface 126 of the side flange 51 which is in contact with the damper housing 28 lies substantially flush with an outer surface 125 of that part of the side flange 52 which includes the joint portion 128 and is facing the damper housing 28. Furthermore, because of the protrusion 56 on the vertical bead 45 of the damper housing 28, the joint portion 128 is separated from the damper housing 28 by the distance E and hence forms a non-contact portion relative to the damper housing 28. With this arrangement, the joint portion 128 (Fig. 6) between the upper bracket 37 and the lower bracket 38 forms a non-contact portion relative to the damper housing 28. In order to prevent generation of unpleasant vibration noise, it is desired that a space be provided between the joint portion 128 and the damper housing 28. In this instance, if the space is excessively small, it will lead to generation of unpleasant vibration noise. Alternatively, if the space is excessively large, it will lead to reduction in bonding strength of the joint portion 128. However, according to the present invention, the stepped lower end portion 58 of the side flange 52 of the lower bracket 38 serves to effectively block or prevent vibration from transmitting from a joint portion between the lower bracket 38 and the damper housing 28 to the joint portion 128 between the side flanges 51, 52 of the upper and lower brackets 37, 38, and also to keep the space between the joint portion 128 and the damper housing 28 within a desired range, thereby securing a desired bonding strength of the joint portion 128.

In the illustrated embodiment described above, the torque rod mounting structure according to the present invention is used in a motor vehicle. It is to be noted that the torque rod mounting structure of the invention can be also employed as a support structure for a vibration source.

A torque rod mounting structure for mounting an end (21) of a torque rod (13) to a vehicle body (18) includes a bracket assembly (15) having a pair of vertically spaced upper and lower brackets (37, 38) attached to and projecting from a damper housing (28) and connected at respective front end portions thereof to the end of the torque rod. The bracket assembly also includes a stay bracket (42) connected at one end to the damper housing below the lower bracket and, at an opposite end, to the front end portion of the lower bracket. The stay bracket is configured to form, together with the damper housing, a hollow portion having a closed cross section.

## Claims

1. A torque rod mounting structure for mounting one end (21) of a torque rod (13) to a vehicle body (18) with an opposite end of the torque rod (13) being connected to an engine (17) installed in an engine room (26) of the vehicle body (18), the torque rod mounting structure comprising:
a damper housing (28) forming a part of the vehicle body (18) and facing the engine room (26); **characterized by**
a bracket assembly (15) including:
an upper bracket (37) attached to the damper housing (28) and projecting from the damper housing (28) into the engine room (26), the upper bracket (37) having a front end portion (68) disposed above and connected to the one end (21) of the torque rod (13);
a lower bracket (38) attached to the damper housing (28) and projecting from the damper housing (28) into the engine room (26), the lower bracket (38) having a front end portion (41) disposed beneath and connected to the one end (21) of the torque rod (13); and
a stay bracket (42) having a first end (86, 87) attached to the damper housing (28) below the lower bracket (38) and a second end (85) opposite to the first end and connected to the front end portion (41) of the lower bracket (38), wherein the stay bracket (42) is configured to form, together with the damper housing (28), a hollow portion (44) having a closed cross section.

2. The torque rod mounting structure according to claim 1, wherein the damper housing (28) has a vertical bead (45) of convex cross section projecting in a width direction of the vehicle body into the engine room (26) and extending in a vertical direction of the vehicle body (18), and the upper bracket (37) has a rear end (47) connected to the vertical bead (45), and the lower bracket (38) has a rear end (48) connected to the vertical bead (45).

3. The torque rod mounting structure according to claim 2, wherein the upper bracket (37) has a side flange (51) facing toward a lateral inward direction of the vehicle body (18) and forming a part of the rear end (47) of the upper bracket (37), the lower bracket (38) has a side flange (52) facing toward the lateral inward direction of the vehicle body (18) and forming a part of the rear end (48) of the lower bracket (38), and the side flange (51) of the upper bracket (37) has a stepped lower end portion (55) rising toward the lateral inward direction of the vehicle body (18) at a height (S1) greater than a thickness (Tw) of the side flange (52) of the lower bracket (38), the stepped lower end portion being joined with the side flange (52) of the lower bracket (38).

4. The torque rod mounting structure according to claim 3, wherein the vertical bead (45) of the damper housing (28) has a protrusion (56) disposed in a longitudinal intermediate portion thereof, the side flange (52) of the lower bracket (38) has a stepped lower end portion (58) rising toward the lateral inward direction of the vehicle body (18) at a height (S2) smaller than a height (Hb) of the protrusion (56) and joined with the protrusion (56) of the vertical bead (45).

5. The torque rod mounting structure according to claim 4, wherein the stepped lower end portion (55) of the side flange (51) of the upper bracket (37) and the stepped lower end portion (58) of the side flange (52) of the lower bracket (38) extend in a front-rear direction of the vehicle body (18).

6. The torque rod mounting structure according to one of claims 3 to 5, wherein the side flange (52) of the lower bracket (38) has a varying height increasing gradually in a direction from a front end toward a rear end of the side flange (52).

## Patentansprüche

1. Drehmomentstützen-Montageanordnung zum Montieren eines Endes (21) einer Drehmomentstütze (13) an einem Fahrzeugkörper (18), wobei ein gegenüberliegendes Ende der Drehmomentstütze (13) mit einem in einem Motorraum (26) des Fahrzeugkörpers (18) installierten Motor (17) verbunden ist, wobei die Drehmomentstützen-Montageanordnung
ein Dämpfergehäuse (28), welches ein Teil des Fahrzeugkörpers (18) bildet und dem Motorraum (26) zugewandt ist, umfasst;
**gekennzeichnet durch** eine Halteranordnung (15), umfassend: eine an dem Dämpfergehäuse (28) befestigte und von dem Dämpfergehäuse (28) in den Motorraum (26) hineinragende obere Halterung (37), wobei die obere Halterung (37) einen vorderen Endabschnitt (68) aufweist, welcher oberhalb des einen Endes (21) der Drehmomentstütze (13) angeordnet und mit diesem verbunden ist;
eine an dem Dämpfergehäuse (28) befestigte und von dem Dämpfergehäuse (28) in den Motorraum (26) hineinragende untere Halterung (38), wobei die untere Halterung (38) einen vorderen Endabschnitt (41) aufweist, welcher unterhalb des einen Endes (21) der Drehmomentstütze (13) angeordnet und mit diesem verbunden ist; und
eine Verankerungshalterung (42), welche ein an dem Dämpfergehäuse (28) unterhalb der unteren Halterung (38) befestigtes erstes Ende (86, 87), und ein dem ersten Ende gegenüberliegendes und mit dem vorderen Endabschnitt (41) der unteren Halterung (38) verbundenes zweites Ende (85) aufweist, wobei die Verankerungshalterung (42) dafür eingerichtet ist, zusammen mit dem Dämpfergehäuse (28) einen Hohlabschnitt (44) zu bilden, welcher ein geschlossenen Querschnitt aufweist.

2. Drehmomentstützen-Montageanordnung nach Anspruch 1, wobei das Dämpfergehäuse (28) einen in einer Breitenrichtung des Fahrzeugkörpers in den Motorraum (26) hineinragenden und sich in einer vertikalen Richtung des Fahrzeugkörpers (18) erstreckenden vertikalen Wulst (45) mit konvexen Querschnitt aufweist, und wobei die obere Halterung (37) ein mit dem vertikalen Wulst (45) verbundenes hinteres Ende (47) aufweist, und wobei die untere Halterung (38) ein mit dem vertikalen Wulst (45) verbundenes hinteres Ende (48) aufweist.

3. Drehmomentstützen-Montageanordnung nach Anspruch 2, wobei die obere Halterung (37) einen in eine laterale, nach innen gerichtete Richtung des Fahrzeugkörpers (18) zeigenden und einen Teil des hinteren Endes (47) der oberen Halterung (37) bildenden Seitenflansch (51) aufweist, wobei die untere Halterung (38) einen in die laterale, nach innen gerichtete Richtung des Fahrzeugkörpers (18) zeigenden und einen Teil des hinteren Endes (48) der unteren Halterung (38) bildenden Seitenflansch (52) aufweist, und wobei der Seitenflansch (51) der oberen Halterung (37) einen sich auf eine Höhe (S1), welche größer als eine Dicke (Tw) des Seitenflansches (52) der unteren Halterung (38) ist, in die laterale, nach innen gerichtete Richtung des Fahrzeugkörpers (18) erhebenden, gestuften unteren Endabschnitt (55) aufweist, wobei der gestufte untere Endabschnitt mit dem Seitenflansch (52) der unteren Halterung (38) zusammengefügt ist.

4. Drehmomentstützen-Montageanordnung nach Anspruch 3, wobei der vertikale Wulst (45) des Dämpfergehäuse (28) einen in einem longitudinalen mittleren Abschnitt davon angeordneten Vorsprung (56) aufweist, wobei der Seitenflansch (52) der unteren Halterung (38) einen sich auf eine Höhe (S2), welche kleiner als eine Höhe (Hb) der Erhebung (56) ist, in die laterale, nach innen gerichtete Richtung des Fahrzeugkörpers (18) erhebenden, gestuften unteren Endabschnitt (58) aufweist, welcher mit der Erhebung (56) des vertikalen Wulsts (45) zusammengefügt ist.

5. Drehmomentstützen-Montageanordnung nach Anspruch 4, wobei der gestufte untere Endabschnitt (55) des Seitenflansches (51) der oberen Halterung (37) und der gestufte unterer Endabschnitt (58) des Seitenflansches (52) der unteren Halterung (38) sich in einer Front-Heck-Richtung des Fahrzeugkörpers (18) erstrecken.

6. Drehmomentstützen-Montageanordnung nach einem der Ansprüche 3 bis 5, wobei der Seitenflansch (52) der unteren Halterung (38) eine variierende Höhe aufweist, welche fortschreitend, in einer Richtung von einem vorderen Ende in Richtung auf ein hinteres Ende des Seitenflansch (52) zu, ansteigt.

## Revendications

1. Structure de montage de bielle de poussée pour montage d'une extrémité (21) d'une bielle de poussée (13) sur une carrosserie de véhicule (18) avec une extrémité opposée de la bielle de poussée (13) qui est raccordée à un moteur (17) installé dans un compartiment moteur (26) de la carrosserie du véhicule (18), la structure de montage de bielle de poussée comprenant :
un logement d'amortisseur (28) formant une partie de la carrosserie de véhicule (18) et faisant face au compartiment moteur (26) ; **caractérisée par**
un ensemble console (15) comprenant :
une console supérieure (37) fixée au logement d'amortisseur (28) et dépassant du logement d'amortisseur (28) dans le compartiment moteur (26), la console supérieure (37) ayant une portion d'extrémité avant (68) disposée au-dessus de et raccordée à ladite extrémité (21) de la bielle de poussée (13) ;
une console inférieure (38) fixée au logement d'amortisseur (28) et dépassant du logement d'amortisseur (28) dans le compartiment moteur (26), la console inférieure (38) ayant une portion d'extrémité avant (41) disposée en dessous de et raccordée à ladite extrémité (21) de la bielle de poussée (13) ; et
une console d'étai (42) ayant une première extrémité (86, 87) fixée au logement d'amortisseur (28) en dessous de la console inférieure (38) et une seconde extrémité (85) opposée à la première extrémité et raccordée à la portion d'extrémité avant (41) de la console inférieure (38), où la console d'étai (42) est configurée pour former, conjointement avec logement d'amortisseur (28), une portion creuse (44) ayant une section fermée.

2. Structure de montage de bielle de poussée selon la revendication 1, dans laquelle le logement d'amortisseur (28) comporte une baguette verticale (45) de section convexe dépassant dans une direction de la largeur de la carrosserie de véhicule dans le compartiment moteur (26) et s'étendant dans une direction verticale de la carrosserie de véhicule (18), et la console supérieure (37) comporte une extrémité arrière (47) raccordée à la baguette verticale (45), et la console inférieure (38) comporte une extrémité arrière (48) raccordée à la baguette verticale (45).

3. Structure de montage de bielle de poussée selon la revendication 2, dans laquelle la console supérieure (37) comporte une bride latérale (51) faisant face vers une direction intérieure latérale de la carrosserie de véhicule (18) et formant une partie de l'extrémité arrière (47) de la console supérieure (37), la console inférieure (38) comporte une bride latérale (52) faisant face vers la direction intérieure latérale de la carrosserie de véhicule (18) et formant une partie de l'extrémité arrière (48) de la console inférieure (38), et la bride latérale (51) de la console supérieure (37) comporte une portion d'extrémité inférieure étagée (55) s'élevant vers la direction intérieure latérale de la carrosserie de véhicule (18) à une hauteur (S1) plus grande qu'une épaisseur (Tw) de la bride latérale (52) de la console inférieure (38), la portion d'extrémité inférieure étagée étant jointe à la bride latérale (52) de la console inférieure (38).

4. Structure de montage de bielle de poussée selon la revendication 3, dans laquelle la baguette verticale (45) du logement d'amortisseur (28) comporte une protubérance (56) disposée dans une portion intermédiaire longitudinale de celle-ci, la bride latérale (52) de la console inférieure (38) comporte une portion d'extrémité inférieure étagée (58) s'élevant vers la direction intérieure latérale de la carrosserie de véhicule (18) à une hauteur (S2) plus petite qu'une hauteur (Hb) de la protubérance (56) et jointe à la protubérance (56) de la baguette verticale (45).

5. Structure de montage de bielle de poussée selon la revendication 4, dans laquelle la portion d'extrémité inférieure étagée (55) de la bride latérale (51) de la console supérieure (37) et la portion d'extrémité inférieure étagée (58) de la bride latérale (52) de la console inférieure (38) s'étendent dans une direction avant-arrière de la carrosserie de véhicule (18).

6. Structure de montage de bielle de poussée selon l'une des revendications 3 à 5, dans laquelle la bride latérale (52) de la console inférieure (38) a une hauteur variable augmentant progressivement dans une direction depuis une extrémité avant vers une extrémité arrière de la bride latérale (52).
